# EUROPÄISCHE PATENTSCHRIFT

(11) **EP 3 813 962 B1**
(45) Veröffentlichungstag und Bekanntmachung des Hinweises auf die Patenterteilung: **04.12.2024**
(21) Anmeldenummer: 19739915.7
(22) Anmeldetag: 27.06.2019
(51) Int. Cl.: A62C 35/68, F16L 13/02, F16L 41/08, F16L 58/10

(54) **VERFAHREN ZUM HERSTELLEN EINES POLYMERVEREDELTEN ROHRLEITUNGSELEMENTS, SOWIE ROHRLEITUNGSELEMENT UND ROHRLEITUNGSSYSTEM MIT SELBIGEM**
METHOD FOR PRODUCING A POLYMER-IMPROVED PIPE ELEMENT, AND PIPE ELEMENT AND PIPE SYSTEM COMPRISING SAME
PROCÉDÉ POUR LA FABRICATION D'UN ÉLÉMENT DE CONDUITE TUBULAIRE REVÊTU DE POLYMÈRE, AINSI QU'ÉLÉMENT DE CONDUITE TUBULAIRE ET SYSTÈME DE CONDUITE TUBULAIRE LE COMPRENANT

(30) Priorität: 27.06.2018 DE 102018115525
(43) Veröffentlichungstag der Anmeldung: 05.05.2021
(73) Patentinhaber: Minimax Viking Patent Management GmbH, 23840 Bad Oldesloe (DE)
(72) Erfinder: RÖNPAGEL, Andreas, 23840 Bad Oldesloe (DE); EHLERS, Jan, 23840 Bad Oldesloe (DE)
(74) Vertreter: Eisenführ Speiser
(86) Internationale Anmeldenummer: PCT/EP2019/067154
(87) Internationale Veröffentlichungsnummer: WO 2020/002502

(56) Entgegenhaltungen:
- EP-A1- 0 344 896
- EP-A1- 2 623 163
- EP-B1- 2 766 653
- US-A1- 2002 195 426
- US-A1- 2018 031 152

## Beschreibung

Die vorliegende Erfindung betrifft ein Verfahren zum Herstellen eines polymerveredelten Rohrleitungselements. Ferner betrifft die Erfindung ein Rohrleitungselement, insbesondere hergestellt in einem solchen Verfahren. Ferner betrifft die Erfindung ein Rohrleitungssystem mit solch einem Rohrleitungselement.

Verfahren zum Herstellen von Rohrleitungen für Feuerlöschanlagen sind allgemein bekannt. Rohrleitungselemente in Feuerlöschanlagen sind der besonderen Herausforderung ausgesetzt, dass sie über sehr lange Zeiträume ungenutzt in Objekten installiert sind, und im Einsatzfall zuverlässig die ihnen zukommende Aufgabe des Fluidtransports gewährleisten müssen.

Weit verbreitet sind etwa Feuerlöschanlagen, bei denen die Rohrleitungssysteme auch im Bereitschaftszustand Löschflüssigkeit führen und alternativ solche, die im Bereitschaftszustand in den Sprinklerleitungen noch keine Löschflüssigkeit führen. Insbesondere bei den letztgenannten Systemen ist die Korrosionsanfälligkeit im Inneren der Rohre eine besondere Herausforderung, weswegen im Stand der Technik Bemühungen unternommen worden sind, die Korrosionsbeständigkeit von Rohrleitungselementen insbesondere für Feuerlöschanlagen zu senken. Um die Problematik von Korrosion innerhalb von Feuerlöschanlagen zu umgehen, haben sich alternative Ansätze entwickelt, in denen große Teile des Rohrleitungssystems, und mit ihnen überwiegende Mengen der verbauten Rohrleitungselemente im Bereitschaftszustand nicht mit Löschfluid gefüllt sind, sondern mit Gasen.

Die Kosten für die Systeme aus dem Stand der Technik sind bisweilen beträchtlich, da einerseits die Verwendung korrosionsresistenter Rohre oder aufwendige Passivierungsverfahren notwendig waren, und zum anderen hohe Installationskosten für das Einfüllen von Gas in die jeweiligen Rohrleitungssysteme notwendig war.

In EP 1 2153 964 und EP 2 766 653 sind jeweils Systeme und Verfahren beschrieben, die gegenüber dem Stand der Technik eine deutliche Verbesserung erzielen. Dort wird erstmalig die Verwendung einer Polymerveredelung mittels Autodeposition auf der Rohrinnenseite bei Rohrleitungselementen von Feuerlöschanlagen beschrieben. Die dort beschriebene Polymerveredelung ist durch die erzielte ionische Bindung eines polymerbasierten Beschichtungsmaterials an der Rohroberfläche äußerst robust und ermöglicht es, einfache, per se noch nicht korrosionsbeständige Metalle, insbesondere niedriglegierte Stahlsorten, zu verwenden. Gleichzeitig wird selbst über längere Beobachtungszeiträume sehr geringe Korrosionsentwicklung bis hin vollständiger Korrosionsbeständigkeit erreicht.

Weiter zeigt EP 0 344 896 A1 ein sich aus mehreren Rohrstücken zusammensetzendes Rohrelement und ein Verfahren zu dessen Herstellung. Die Rohrstücke werden stirnseitig zueinander ausgerichtet und über eine Schweißverbindung zusammengefügt. In vorbestimmten Abständen können Klebestellen als Dehnungsfugen vorgesehen sein. Auf der Innenseite des Rohrelements ist ein Auskleidungsschlauch angeordnet, der mittels eines auf den Auskleidungsschlauch aufgetragenen Haftklebstoffs mit der Rohrinnenseite in Kontakt gebracht wird.

Nichtsdestotrotz besteht gegenüber dem Stand der Technik weiterer Verbesserungsbedarf. So besteht gegenüber dem Stand der Technik das Bestreben, nicht nur einfache Rohrleitungselemente mit einer Polymerveredelung zu versehen, die lediglich aus einem rohrförmigen Hohlkörper mit einem Einlass und einem Auslass bestehen, sondern auch solche Rohrleitungselemente, die mehrere Auslässe aufweisen, und insbesondere aus mehreren Hohlkörpern zusammengesetzt sind. Das Zusammensetzen mehrerer Hohlkörper zu komplexen Rohrleitungselementen erfolgt entweder mittels Zusammenstückeln der Hohlkörper über Kupplungen, Rohrverbinder und dergleichen, oder mittels Schweißen. Es hat sich herausgestellt, dass das Verwenden von Rohrverbindern im Bereich des Übergangs von einem Hohlkörper zum nächsten Hohlkörper zu einer Erhöhung des Strömungswiderstandes führt, was die Strömungsgeschwindigkeit herab- und entstehende Druckverluste heraufsetzt, ausgedrückt durch den sogenannten C-Faktor, herabsetzt. Der notwendige apparative Aufwand zum Fördern des Löschfluids wird hierdurch potentiell höher, beispielsweise in Form des Bedarfs leistungsfähigerer Pumpen oder größerer Rohr-Nennweiten. Der C-Faktor berechnet sich nach allgemein bekannten Grundsätzen anhand der Hazen-Williams-Gleichung.

Sofern im Stand der Technik erste und zweite Hohlkörper zu einem Rohrleitungselement mittels Schweißen verbunden wurden, so wurde dies jeweils lediglich unter Beachtung des Erfordernisses der Druckdichtigkeit vorgenommen. In der bisherigen Praxis waren also die Verbindungen der Hohlkörper am Rohrleitungselement zwar druckdicht miteinander verbunden. Die beispielsweise aus EP 2 766 653 bekannte Langzeit-Korrosionsfestigkeit stelle sich aber dennoch nicht zuverlässig ein.

Demzufolge lag der Erfindung die Aufgabe zugrunde, ein Verfahren zum Herstellen eines polymerveredelten Rohrleitungselements anzugeben, welches die vorstehend beschriebenen Nachteile möglichst weitgehend überwindet. Insbesondere lag der Erfindung die Aufgabe zugrunde, ein Verfahren der eingangs bezeichneten Art anzugeben, was trotz des Vorhandenseins einer Schweißverbindung bei komplexen Rohrleitungselementen eine ausreichende Korrosionsbeständigkeit gewährleistet.

Die Erfindung löst die ihr zugrundeliegende Aufgabe bei dem eingangs bezeichneten Verfahren mit den Merkmalen von Anspruch 1. Insbesondere umfasst das Verfahren die Schritte:
- Bereitstellen eines ersten Hohlkörpers und eines zweiten Hohlkörpers, wobei der erste und zweite Hohlkörper jeweils eine Wand aufweisen, und die Wand jeweils eine umlaufende Kantenfläche aufweist, wobei die umlaufende Kantenfläche des ersten Hohlkörpers an einem Stirnende des Hohlkörpers ausgebildet ist, und wobei die umlaufende Kantenfläche des zweiten Hohlkörpers zu den Stirnenden des zweiten Hohlkörpers beabstandet ist und einen Ausschnitt durch die Wand des zweiten Hohl-körpers hindurch definiert,
- Ausrichten der umlaufenden Kantenfläche des ersten Hohlkörpers und der umlaufenden Kantenfläche des zweiten Hohlkörpers aufeinander,
- Schweißen des ersten Hohlkörpers an den zweiten Hohlkörper entlang der umlaufenden Kantenflächen, wobei eine umlaufende Schweißnaht erzeugt wird, die eine sich auf der Innenseite des Rohrleitungselements erstreckende Wurzel aufweist, sowie
- Aufbringen einer polymerbasierten Schicht auf der Innenseite des Rohrleitungselements, wobei die polymerbasierte Schicht die Innenseite des Rohrleitungselements und die Wurzel der Schweißnaht vollständig bedeckt.

Der Erfindung liegt die Erkenntnis zugrunde, dass das Rohrleitungselement durch Anbringen einer Schweißnaht, welche sich vollständig umlaufend im Inneren des Rohrleitungselements, d.h. im Kreis erstreckt, gegenüber dem Stand der Technik mittels der Schweißnahtwurzel eine vorteilhafte Oberflächengeometrie erzeugt wird, die ein vollständiges Benetzen der gesamten inneren Oberfläche des Rohrleitungselements inklusive eines Übergangsbereichs vom ersten zum zweiten Hohlkörper mit der polymerbasierten Schutzschicht ermöglicht. Die sich vollständig umlaufend erstreckende Wurzel der Schweißnaht sorgt für einen im Vergleich zum Stand der Technik deutlich sanfteren Konturübergang zwischen dem ersten und dem zweiten Hohlkörper, so dass es hierdurch erst möglich wird, unter Verwendung der Polymerveredelung komplexere Rohrleitungselemente als nur einteilige Rohrleitungselemente langfristig korrosionsfest zu machen. Der sanfte Konturübergang zwischen dem ersten und zweiten Hohlkörper bietet Vorteile für jegliche Art der Polymerveredelung, prädestiniert das Rohrleitungselement allerdings ganz besonders für die Polymerveredelung mittels Autodeposition, da die Strömungsverhältnisse im Rohrinneren infolge des sanften Konturübergangs weniger stark gestört werden. Unter dem Ausrichten der Kantenflächen aufeinander wird verstanden, dass die Kantenfläche des ersten Hohlkörpers und die Kantenfläche des zweiten Hohlkörpers derart relativ zueinander orientiert und beabstandet werden, dass die beiden Hohlkörper entlang der Kantenflächen miteinander verschweißt werden können.

Das erfindungsgemäße Verfahren wird vorteilhaft weitergebildet, in dem die Kantenflächen des ersten und zweiten Hohlkörpers jeweils eine umlaufende Innenkante aufweisen, und der Schritt des Schweißens umfasst: Ausbilden der Wurzel der Schweißnaht in einer Dicke, die wenigstens eine der Innenkanten, und vorzugsweise beide Innenkanten, vollständig erfasst.

Grundsätzlich gilt, dass die Eignung der Innenseite des Rohrleitungselements nach dem Schweißen umso geeigneter für das nachfolgende Beschichten ist, desto mehr Anteile der Kantenflächen von der Wurzel erfasst worden sind, da die Wurzel einen sehr zuverlässigen Verschluss von etwaigen zuvor an der Kante bestehenden Unregelmäßigkeiten durch Aufschmelzen erzielt, und zugleich ein im Vergleich zur Kantenfläche der Hohlkörper weichere Oberflächengeometrie aufweist. Unter Unregelmäßigkeiten werden insbesondere Risse, Spalten, Kapillaren etc. im Submillimeterbereich sowie scharfe Kanten verstanden. Je mehr solcher Unregelmäßigkeiten vermieden werden können, desto besser ist der zu erwartende Beschichtungserfolg. Es hat sich erfindungsgemäß herausgestellt, dass eine zufriedenstellende Beschichtung bereits erreicht wird, wenn die Wurzel lediglich eine der beiden Kantenflächen des ersten oder zweiten Hohlkörpers vollständig erfasst, und von der jeweils anderen Kantenfläche ein Teilbereich, insbesondere ein radial innerer Teilbereich, nicht erfasst wird. Besonders bevorzugt werden beide Kantenflächen vollständig erfasst. Es wurde erkannt, dass bei anschließender Polymerveredelung der Rohrleitungselemente insbesondere mittels Anwendung eines Autodepositionsverfahrens auch im Stand der Technik bereits die Kanten der Rohrleitungselemente beschichtetet wurden. Entgegen bislang etablierter Vormeinung gelang dies allerdings noch nicht in zufriedenstellender Dicke. Hier zeigt sich ein weiterer Vorteil der Erfindung: Durch die mit der Wurzelerfassung erreichte Vermeidung scharfer Kanten im Schweißnahtbereich wird eine bessere Beschichtung auch der etwaig verbleibenden Kanten erzielt. Unter einer scharfen Kante wird ein Kantenwinkel von weniger als 90° verstanden.

In einer bevorzugten Ausführungsform des Verfahrens erfasst die Wurzel der Schweißnaht die umlaufende Innenkante eines der Hohlkörper vollständig, und die verbleibende Innenkante des anderen Hohlkörpers ist an der Schweißnaht um einen vorbestimmten Maximalwert in radialer Richtung von der Schweißnaht beabstandet.

Vorzugsweise ist der vorbestimmte Maximalwert, sofern gleiche Wandstärken vorliegen, kleiner oder gleich der Hälfte einer Wandstärke der Hohlkörper, besonders bevorzugt kleiner oder gleich eines Viertels der Wandstärke der Hohlkörper. Alternativ ist der Maximalwert, sofern unterschiedliche Wandstärken vorliegen, vorzugsweise kleiner oder gleich einer Differenz der Wandstärken der Hohlkörper, besonders bevorzugt kleiner oder gleich der Hälfte der Differenz der Wandstärken der Hohlkörper.

In einer weiteren bevorzugten Ausführungsform des Verfahrens, bei dem der Schritt des Schweißens umfasst:
Ausbilden der Wurzel der Schweißnaht in einer Dicke, die die Innenkanten beider Hohlkörper vollständig erfasst, wird das Schweißen so ausgeführt, dass die Wurzel der Schweißnaht von einer Innenseite der Wand des ersten und/oder zweiten Hohlkörpers um einen vorbestimmten Maximalwert radial nach innen vorsteht, wobei der vorbestimmte Maximalwert vorzugsweise das 0,7fache der Wandstärke der Hohlkörper oder weniger beträgt. Durch das auf diese Weise sichergestellte, allerdings nur leichte Hervorstehen der Schweißnaht in das Innere des Rohrleitungselements kann auf einfache Weise sichergestellt werden, dass wirklich beide Kantenflächen vollständig erfasst worden sind, und keine Kavitäten oder Ähnliches nach dem Schweißen im Bereich der Innenkanten der Hohlkörper verbleiben. Durch Begrenzen der maximalen Höhe, um die die Schweißnaht nach innen vorsteht, wird sichergestellt, dass durch die Schweißnaht kein ungewünschter erhöhter Strömungswiderstand erzeugt wird, was den C-Faktor, also die Langzeit-Korrosionssicherheit des Rohrleitungselements, reduzieren würde.

Erfindungsgemäß ist die umlaufende Kantenfläche des ersten Hohlkörpers an einem Stirnende des Hohlkörpers ausgebildet und die umlaufende Kantenfläche des zweiten Hohlkörpers ist zu den Stirnenden des zweiten Hohlkörpers beabstandet und definiert einen Ausschnitt durch die Wand des zweiten Hohlkörpers hindurch. Diese Ausgestaltung liegt insbesondere dann vor, wenn der ersten Hohlkörper ein sogenanntes Anschlusselement darstellt, und der zweite Hohlkörper ein sogenanntes Grundrohr darstellt, von dem aus sich eine oder mehrere Anschlusselemente seitlich fort erstrecken. An diese Anschlusselemente werden am Beispiel von Feuerlöschanlagen beispielsweise Sprinkler angeschlossen. Eine Beabstandung der Kantenfläche zu den Stirnenden des zweiten Hohlkörpers bewirkt eine Verbindung des ersten und zweiten Hohlkörpers nach Art eines T-Musters. Vorzugsweise weisen die Hohlkörper jeweils eine Längsachse auf, und die Längsachsen der Hohlkörper sind senkrecht oder in einem Winkel von +/- 5° zur Senkrechten zu einander angeordnet. Weiter vorzugsweise ist die Längsachse des ersten Hohlkörpers koaxial zu einer Mittenachse des Ausschnitts ausgerichtet.

Der Abstand des Ausschnitts in dem zweiten Hohlkörper von dem nächstgelegenen Stirnende liegt vorzugsweise in einem Bereich von 20 cm bis 2 m.

Alternativ zu der vorstehend beschriebenen Anordnung ist in einer nicht zur Erfindung gehörenden Ausführungsform die umlaufende Kantenfläche des zweiten Hohlkörpers (ebenfalls) an einem Stirnende des zweiten Hohlkörpers ausgebildet. Bei dieser Ausführungsform werden also ein erster und zweiter Hohlkörper jeweils an ihrem Stirnende mittels Schweißen miteinander verbunden. Diese Ausführungsform ist besonders bevorzugt anzuwenden, wenn der erste und der zweite Hohlkörper im Wesentlichen den gleichen Nenndurchmesser aufweisen und wenn mittels Aneinanderschweißen des ersten und zweiten Hohlkörpers verlängerte Grundrohrelemente erzeugt werden sollen.

In einer weiteren bevorzugten Ausführungsform umfasst das Verfahren ferner den Schritt: Erzeugen wenigstens einer der umlaufenden Kantenflächen des ersten und/oder zweiten Hohlkörpers mittels Schneiden, vorzugsweise mittels Plasmaschneiden. Das Plasmaschneiden hat sich insbesondere für Wandstärken von 3,0 mm und darüber als hocheffiziente Möglichkeit erwiesen, die Kantenflächen an den Hohlkörpern zu erzeugen. Es sind präzise Schnitte mit hoher Geschwindigkeit und somit hoher Wirtschaftlichkeit möglich. Plasmaschneiden eignet sich ferner für eine Automatisierung des Fertigungsprozesses.

Die erzeugte Kantenfläche entspricht vorzugsweise der Kontur des jeweils anderen Hohlkörpers, an den der Hohlkörper mit seiner Kantenfläche angeschweißt werden soll. Vorzugsweise wird die Kontur der zu erzeugenden Kantenfläche vorab messtechnisch bestimmt, und dann die Kantenfäche in Abhängigkeit der zuvor bestimmten Kontur erzeugt.

In einer weiteren bevorzugten Ausführungsform umfasst das Verfahren ferner den Schritt: Säubern wenigstens einer der umlaufenden Kantenflächen, vorzugsweise sämtlicher umlaufender Kantenflächen vor dem Schweißen, vorzugsweise nach dem Schneiden, insbesondere Plasmaschneiden, und vor dem Schweißen. Das Säubern der Kantenflächen umfasst insbesondere das Entfernen von Graten und losen Partikeln, aber auch von Verschmutzungen. Falls das vorgelagerte Schneiden der Kantenflächen mittels Plasmaschneiden erfolgt ist, hat sich hierdurch mitunter eine Metalloxidschicht im Bereich der Kantenfläche ausgebildet. Es ist im Rahmen der Erfindung erkannt worden, dass das Säubern der Kantenfläche und insbesondere das Entfernen von Metalloxiden von der Oberfläche der Hohlkörper im Bereich der Kantenflächen zu einem sehr viel gleichmäßigeren Schweißbild führt und eine gleichmäßigere Ausprägung der Wurzel der Schweißnaht im Inneren des Rohrleitungselements zur Folge hat. Vorteilhaft ist an dieser Ausführungsform ferner, dass sowohl das Säubern der Kantenflächen mit geringem Aufwand automatisierbar ist, insbesondere wenn es mit einer rotatorisch angetriebenen Bürste ausgeführt wird. Zum anderen erlaubt das Säubern der Kantenflächen per se auch einen automatisierten Schweißvorgang, da dieser angesichts der gesäuberten und von Metalloxiden befreiten Kantenflächen deutlich leichter beherrschbar ist.

Zusammenfassend umfasst also der Schritt des Säuberns erfindungsgemäß vorzugsweise das Entfernen von Metalloxiden und losen Partikeln von der wenigstens einen umlaufenden Kantenfläche, besonders bevorzugt von sämtlichen Kantenflächen, vorzugsweise mittels Bürsten.

Das erfindungsgemäße Verfahren umfasst in einerweiteren bevorzugten Ausführungsform ferner den Schritt: Abflachen der Wand des ersten und/oder zweiten Hohlkörpers in demjenigen Bereich, in dem sich jeweils die umlaufende Kantenfläche erstreckt oder erzeugt werden soll, vorzugsweise vor dem Schritt des Schweißens und weiter vorzugsweise vor dem Schritt des Schneidens. Das Abflachen kann mittels Aufbringen einer Deformationskraft von außen auf die Wand des jeweiligen Hohlkörpers erzeugt werden, beispielswiese pneumatisch, hydraulisch oder anderweitig mechanisch. Optional kann auf der Unterseite des Rohrleitungselements eine Gegen-Halbschale in Größe des jeweils entsprechend abzuflachenden Bereichs als Gegenhalter von außen gegen den Hohlkörper gelegt werden, um Deformationen des Rohrleitungselements an ungewünschter, also nicht an jener Stelle, an der die Abflachung stattfinden soll, zu vermeiden. Der Vorteil der Abflachung liegt darin, dass das Werkzeug zum Erzeugen der Schweißnaht eine im Wesentlichen ebene Kreisbewegung vollführen kann und nicht entlang einer dreidimensionalen Krümmung geführt werden muss. Hierdurch werden zum einen die Prozessparameter in der Führung des Schweißwerkzeuges leichter beherrschbar, und zum anderen wird der Verlauf des aufgeschmolzenen Metalls leichter beherrschbar. Da die Kantenfläche im Bereich der Abflachung im Wesentlichen eben verläuft, kann die Kantenfläche des korrespondierenden Hohlkörpers, welche an einer Stirnseite ausgebildet ist, ebenfalls in einer Ebene liegen, was das Schneiden der Kantenfläche am jeweiligen Hohlkörper wiederum vereinfacht. Die Abflachung wird vorzugsweise mit einer vorbestimmten Eindrücktiefe vorgenommen, wobei die Tiefe in bevorzugten Ausführungsformen in einem Bereich vom 0,05fachen bis zum 0,1 8fachen der Nennweite des abgeflachten Hohlkörpers liegt.

Das Aufbringen der polymerbasierten Schicht erfolgt in dem erfindungsgemäßen Verfahren vorzugsweise mittels Eintauchens des Rohrleitungselements in ein Tauchbad, das ein entsprechendes Beschichtungsmaterial enthält. Der Vorteil eines Tauchbeschichtungsverfahrens liegt darin, dass zusätzlich zu einer Beschichtung des besonders sensiblen Innenbereichs der Rohrleitungselemente auch die äußere Oberfläche zumindest weitgehend im selben Beschichtungsvorgang beschichtet wird.

In einer weiteren bevorzugten Ausführungsform sind die Hohlkörper aus einem zur chemischen Autodeposition geeigneten Metall ausgebildet, insbesondere aus einem eisen- und/oder zinkhaltigen Metall, und der Schritt des Aufbringens der Polymerschicht auf der Innenseite des Rohrleitungselements umfasst: Beschichten, insbesondere mittels chemischer Autodeposition, vorzugsweise mittels Eintauchen des Rohrleitungselements in ein Tauchbad, das ein chemisches Autodepositionsmaterial auf Polymerbasis enthält. Ein Vorteil der Anwendung eines Autodepositionsverfahrens liegt unter anderem darin, dass eine gleichmäßige, sehr korrosionsbeständige Beschichtung mit gleichzeitig geringen Schichtstärken erreicht wird. Eine Beschichtung kann sich insbesondere bei Anwendung eines Tauchverfahrens überall dort bilden, wo das Rohrleitungselement benetzt wird. Hier kommt wiederum der erfindungsgemäße Vorteil der optimierten Schweißnähte zum Tragen, weil durch die vollständige, gleichmäßige Ausbildung der Schweißnaht in den vorstehend beschriebenen bevorzugten Ausführungsformen Kavitäten, und dergleichen weitestgehend vermieden werden. Ein weiterer Vorteil ist darin zu sehen, dass infolge der Autodepositionsschicht und dem von ihr ausgehenden Korrosionsschutz dünnere Rohrwandstärken möglich werden, die bislang aufgrund einer Gefahr des Durchrostens ausgeschlossen waren. Kleinere Wandstärken wiederum haben den Vorteil, dass die von den Schweißnähten eingenommenen Flächenabschnitte im Rohrinneren weiter minimiert werden können, und dass insgesamt weniger Material aufgeschweißt werden muss.

Das Autodepositionsmaterial enthält vorzugsweise polymere Bestandteile, welche ionisch an der Wand der Hohlkörper und an der Wurzel der Schweißnaht gebunden werden, und liegt vorzugsweise als wässrige Emulsion oder Dispersion vor.

Das Autodepositionsmaterial ist in seiner Flüssigphase vorzugsweise sauer, besonders bevorzugt weist es einen pH-Wert in einem Bereich von 1 bis 5 auf, und besonders bevorzugt ein Startermaterial in Form von Metallhalogeniden. Als Metallhalogenide werden für eisenhaltige Metalle insbesondere Eisenhalogenide vorgeschlagen, besonders bevorzugt Eisen(III)fluorid. Die Metallhalogenide setzen mittels Reaktion an der Oberfläche der Rohrleitungselemente Metallionen, im Falle eines eisenhaltigen Rohrleitungselements also insbesondere Eisenionen, insbesondere Fe²⁺-Ionen frei, welche die polymeren Bestandteile im Autodepositionsmaterial destabilisieren, infolgedessen es zu einer Anlagerung an der Metalloberfläche der Schweißnaht und der Hohlkörper kommt.

Das Autodepositionsmaterial weist als polymeren Bestandteil vorzugsweise autodepositionierbare Polymere auf, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

Im erfindungsgemäßen Verfahren wird der Schritt des Eintauchens in einem oder mehreren Tauchgängen solange fortgesetzt wird, bis die an der Innenseite des Rohrleitungselements angebrachte polymerbasierte Schicht eine Dicke in einem Bereich von 7 µm bis 80 µm aufweist, vorzugsweise eine Dicke in einem Bereich von 7 µm bis 30 µm. Die vorgenannten Werte beziehen sich auf die Trockenschichtdicke und insbesondere den Rohrdickenzuwachs relativ zum unbeschichteten Zustand. Es hat sich herausgestellt, dass auch Schichtdicken in einem Bereich ab 7 µm mit dem erfindungsgemäßen Verfahren derart aufgebracht werden können, dass eine vollständige Bedeckung der inneren Oberfläche des Rohrleitungselements erfolgt, sowie eines Großteils der äußeren Oberfläche, sofern entsprechend eingetaucht.

Die Erfindung wurde vorstehend in einem ersten Aspekt unter Bezugnahme auf das erfindungsgemäße Verfahren beschrieben. Die Erfindung betrifft aber ferner auch ein Rohrleitungselement, insbesondere hergestellt nach einem Verfahren der eingangs bezeichneten Art. Die Erfindung löst bei dem Rohrleitungselement die eingangs bezeichnete Aufgabe, indem das Rohrleitungselement aufweist: einen ersten Hohlkörper, einen zweiten Hohlkörper, wobei die Hohlkörper aufeinander ausgerichtet sind und der erste und der zweite Hohlkörper mittels einer umlaufenden Schweißnaht verbunden sind, wobei die Schweißnaht an einem Stirnende des Hohlkörpers ausgebildet ist, wobei die Schweißnaht zu den Stirnenden des zweiten Hohlkörpers beabstandet ist, und wobei die Schweißnaht sich eine sich auf der Innenseite des Rohrleitungselements erstreckende Wurzel aufweist, und eine polymerbasierte Schicht auf der Innenseite des Rohrleitungselements, wobei die polymerbasierte Schicht die Innenseite des Rohrleitungselements und die Wurzel der Schweißnaht vollständig bedeckt.

Das erfindungsgemäße Rohrleitungselement macht sich die Vorteile und bevorzugten Ausführungsformen des erfindungsgemäßen Verfahrens in vollem Umfang zu eigen, weswegen zur Vermeidung von Wiederholungen auf die obigen Ausführungen verwiesen wird.

In einer bevorzugten Weiterbildung des Rohrleitungselements erfasst die Wurzel der Schweißnaht eine Kantenfläche eines der Hohlkörper vollständig, und das Rohrleitungselement weist im Inneren eine verbleibende Innenkante des anderen Hohlkörpers auf, welche um einen vorbestimmten Maximalwert in radialer Richtung von der Schweißnaht beabstandet ist.

Vorzugsweise ist der vorbestimmte Maximalwert, sofern gleiche Wandstärken vorliegen, kleiner oder gleich der Hälfte einer Wandstärke der Hohlkörper, besonders bevorzugt kleiner oder gleich eines Viertels der Wandstärke der Hohlkörper. Alternativ ist der Maximalwert, sofern unterschiedliche Wandstärken vorliegen, vorzugsweise kleiner oder gleich einer Differenz der Wandstärken der Hohlkörper, besonders bevorzugt kleiner oder gleich der Hälfte der Wandstärken der Hohlkörper.

In einer bevorzugten Ausführungsform umfasst die Wurzel der Schweißnaht die Kantenflächen beider Hohlkörper vollständig und steht von einer Innenseite des ersten und/oder zweiten Hohlkörpers um einen vorbestimmten Maximalwert radial nach innen vor, wobei der vorbestimmte Maximalwert vorzugsweise das 0,7-fache der Wandstärke der Hohlkörper oder weniger beträgt.

In einer weiteren bevorzugten Ausgestaltung ist die Wand des ersten Hohlkörpers an einem Stirnende mit einem von den Stirnenden des zweiten Hohlkörpers beabstandeten Bereich der Wand des zweiten Hohlkörpers verschweißt, in dem sich ein Ausschnitt durch die Wand hindurch erstreckt. Eine solche Anordnung der ersten und zweiten Hohlkörper bezeichnet man auch als T-Anordnung. Eine solche Anordnung ist besonders dann bevorzugt, wenn das Rohrleitungselement als ersten Hohlkörper ein Anschlusselement aufweist, und als zweiten Hohlkörper ein Haupt- beziehungsweise Grundrohr, von dem aus sich ein oder mehrere Anschlusselemente seitlich forterstrecken. Die Anschlusselemente werden weiter unten noch detaillierter aufgeführt. Vorzugsweise weisen die Hohlkörper jeweils eine Längsachse auf, und die Längsachsen der Hohlkörper sind senkrecht oder in einem Winkel von +/- 5° zur Senkrechten zu einander angeordnet. Weiter vorzugsweise ist die Längsachse des ersten Hohlkörpers koaxial zu einer Mittenachse des Ausschnitts ausgerichtet.

Der Abstand des Ausschnitts in dem zweiten Hohlkörper von dem nächstgelegenen Stirnende liegt vorzugsweise in einem Bereich von 20 cm bis 2 m.

In einer alternativen bevorzugten Ausgestaltung sind die Wände des ersten und des zweiten Hohlkörpers jeweils an einem Stirnende des jeweiligen Hohlkörpers miteinander verschweißt. Bei dieser Ausgestaltung werden also die Hohlkörper jeweils endseitig miteinander verschweißt, beispielsweise um ein Rohrleitungselement mit einer bestimmten Länge zu erzeugen, die über das Maß der jeweiligen Hohlkörper hinausgeht. Das Verschweißen auf erfindungsgemäße Art und Weise der Hohlkörper ist bei dieser Ausgestaltung besonders bevorzugt für jene Ausgestaltungen, in denen der erste und der zweite Hohlkörper gleiche oder fast gleiche Nenndurchmesser aufweisen. Nenndurchmesser-Abweichungen im Bereich von bis zu 10 % können hierbei in der Regel toleriert werden.

In einer weiteren bevorzugten Ausführungsform ist die Wand des zweiten Hohlkörpers in einem Bereich um den Ausschnitt herum abgeflacht. Mit anderen Worten ist der zweite Hohlkörper in demjenigen Wandbereich, in dem auch der erste Hohlkörper angebracht werden soll, abgeflacht. Dies hat den Vorteil, dass die entsprechende Kantenfläche des ersten Hohlkörpers im Wesentlichen eben ausgebildet sein kann, und keine dreidimensionale Krümmung aufweisen muss, mit der sich der erste Hohlkörper ansonsten an die Wand hätte anschmiegen müssen, da die Wand im Bereich der Abflachungen ebenfalls im Wesentlichen eben ist.

In einer weiteren bevorzugten Ausführungsform sind die Hohlkörper aus einem zur chemischen Autodeposition geeigneten Metall ausgebildet, insbesondere aus einem eisenhaltigen und/oder zinkhaltigen Metall ausgebildet, und die polymerbasierte Schicht enthält einen metallischen Bestandteil, vorzugsweise in Form von Metallionen, bei einem eisenhaltigen Metall also besonders bevorzugt in Form von Eisenionen und bei einem zinkhaltigen Metall in Form von Zinkionen.

Das Autodepositionsmaterial weist als polymeren Bestandteil vorzugsweise autodepositionierbare Polymere auf, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

In einer weiteren bevorzugten Ausgestaltung weist die polymerbasierte Schicht eine Dicke in einem Bereich von 7µm bis 80µm auf, besonders bevorzugt eine Dicke in einem Bereich von 7µm bis 30µm. Dies bezieht sich wiederum auf die Trockenschichtdicke und insbesondere auf eine Dickenzunahme relativ zum unbeschichteten Zustand.

Vorzugsweise ist der zweite Hohlkörper rohrförmig ausgebildet und weist einen Nenndurchmesser in einem Bereich von DN 15 bis DN 300 auf, vorzugsweise DN 32 bis DN 80. Alternativ liegen die Nennweitenbereiche im Zoll-System von ½" (NPS) bis 12" (NPS), besonders bevorzugt in einem Bereich von 1 ¼" (NPS) bis 3" (NPS).

Vorzugsweise weist der zweite Hohlkörper eine Längsachse und eine Rohrlänge in Richtung der Längsachse in einem Bereich von 1 m oder mehr auf, weiter vorzugsweise in einem Bereich von 3 m oder mehr, besonders bevorzugt in einem Bereich von 5 m oder mehr.

Weiter vorzugsweise ist der erste Hohlkörper ebenfalls rohrförmig ausgebildet und weist einen Nenndurchmesser auf, der gleich dem Nenndurchmesser des zweiten Hohlkörpers oder geringer als der Nenndurchmesser des zweiten Hohlkörpers ist.

Der erste Hohlkörper ist vorzugsweise ausgewählt aus der Liste bestehend aus:
Rohr,
Stutzen, Flansch,
Verschlusskappe,
Red uzierstück,
Bogen, oder Nippel.

Vorzugsweise ist an dem ersten Hohlkörper ein Befestigungselement ausgebildet, vorzugsweise ausgewählt aus der Liste bestehend aus:
Gewinde;
Nut; oder
Flanschring.

Das Befestigungselement ist vorzugsweise dazu eingerichtet, Fluidausbringvorrichtungen, wie etwa Löschdüsen, Sprinkler, Fluidverteiler oder andere Rohrleitungselemente an den ersten Hohlkörper anzuschließen. Vorzugsweise ist das Befestigungselement zumindest partiell aus einem der oben genannten zur chemischen Autodeposition geeigneten Metalle, insbesondere einem eisenhaltigen und/oder zinkhaltigen Metall ausgebildet und zumindest partiell mit der polymerbasierten Schicht versehen.

Die Erfindung wurde vorstehend unter Bezugnahme auf ein Rohrleitungselement und ein Herstellverfahren für das Rohrleitungselement beschrieben. In einem weiteren Aspekt betrifft die Erfindung auch ein Rohrleitungssystem einer Feuerlöschanlage, mit einer Anzahl von Rohrleitungselementen, die miteinander gekoppelt sind, wobei eines, mehrere oder sämtliche Rohrleitungselemente nach einer der vorstehend beschriebenen bevorzugten Ausführungsformen ausgebildet wurde, oder hergestellt sind. Die bevorzugten Ausführungsformen und erfindungsgemäßen Vorteile des Herstellverfahrens und des erfindungsgemäßen Rohrleitungselements sind zugleich die Vorteile und bevorzugten Ausführungsformen des erfindungsgemäßen Rohrleitungssystems, weswegen diesbezüglich zur Vermeidung von Wiederholungen auf die vorliegenden Ausführungen verwiesen wird.

Besonders bevorzugt weist eines, mehrere oder sämtliche der Rohrleitungselemente einen rohrförmig ausgebildeten ersten Hohlkörper und einen rohrförmig ausgebildeten zweiten Hohlkörper auf, wobei der Nenndurchmesser des ersten Hohlkörpers gleich oder geringer als der Nenndurchmesser des zweiten Hohlkörpers ist, und wobei an dem der Schweißnaht zwischen den beiden Hohlkörpern abgewandten Stirnseite des ersten Hohlkörpers jeweils ein Sprinkler, eine Löschdüse, ein Fluidverteiler oder ein weiteres Rohrleitungselement angeschlossen ist.

Die Erfindung betrifft ferner auch eine Verwendung eines Rohrleitungselements in einem Rohrleitungssystem einer Feuerlöschanlage, in der eine Anzahl von Rohrleitungselementen miteinander gekoppelt werden, wobei jeweils eines, mehrere oder sämtliche Rohrleitungselemente nach einer der vorstehend beschriebenen bevorzugten Ausführungsformen ausgebildet ist bzw. sind.

Die Erfindung wird nachfolgend unter Bezugnahme auf die beigefügten Figuren und unter Bezugnahme auf bevorzugte Ausführungsbeispiele näher beschrieben. Hierbei zeigen:
- Fig. 1: ein schematisches Verfahrens-Fließbild des erfindungsgemäßen Verfahrens gemäß einem bevorzugten Ausführungsbeispiel,
- Fig. 2: eine schematische räumliche Darstellung eines Rohrleitungselements, hergestellt nach dem Verfahren gemäß Fig. 1,
- Fig. 3a, b: Seitenansichten des Rohrleitungselements gemäß Fig. 2,
- Fig. 4a-e, und Fig. 5 a-e: Detaildarstellungen verschiedener bevorzugter Varianten des Rohrleitungselements gemäß den Fig. 2 und 3a, b,
- Fig. 6: eine weitere Detaildarstellung zu Fig. 5c,
- Fig. 7: eine weitere Detaildarstellung zu Fig. 5b,d,
- Fig. 8: eine schematische Darstellung eines bereichsweise abgeflachten Hohlkörpers', und
- Fig. 9: eine schematische Teildarstellung eines nicht zur Erfindung zählenden Rohrleitungselements.

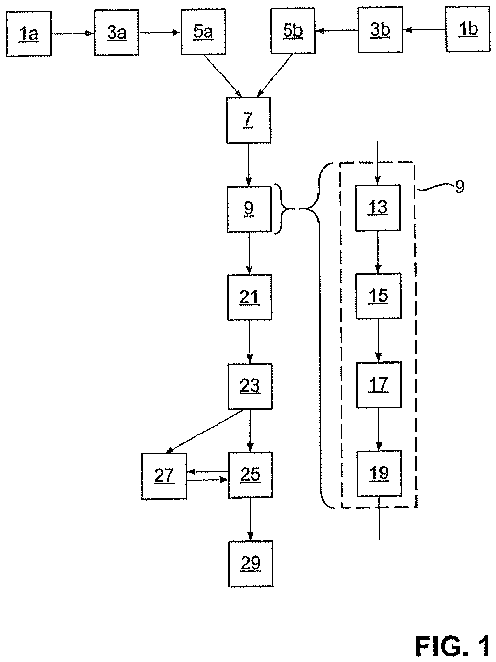

In Figur 1 ist der schematische Ablauf des erfindungsgemäßen Verfahrens zum Herstellen eines polymerveredelten Rohrleitungselements nach einem bevorzugten Ausführungsbeispiel dargestellt. Zunächst werden in den Schritten 1a, 1b ein erster Hohlkörper und ein zweiter Hohlkörper bereitgestellt. Im Anschluss daran werden in einem nächsten Verfahrensschritt 3a, b Kantenflächen an den Hohlkörpern vorgesehen, vorzugsweise mittels Plasmaschneiden. Die Hohlkörper erhalten in den Schritten 3a, b entweder Kantenflächen an einer oder beiden ihrer Stirnseiten oder an einem von den jeweiligen Stirnseiten beabstandeten Wandabschnitt, letzteres in Form eines Ausschnitts.

In einem anschließenden Verfahrensschritt 5a, b werden der erste und zweite Hohlkörper an den Kantenflächen gesäubert, vorzugsweise mittels einer rotatorisch angetriebenen Bürste. Sollte im vorhergehenden Schritt zum Erzeugen der Kantenflächen Plasmaschneiden zum Einsatz gekommen sein, werden durch das Bürsten entstandene Metalloxide und lose Partikel sowie Grate möglichst weitgehend entfernt.

In einem nächsten Verfahrensschritt werden der erste Hohlkörper und der zweite Hohlkörper so zueinander ausgerichtet, dass jeweils eine Kantenfläche des einen Hohlkörpers möglichst nah benachbart zu einer korrespondierenden Kantenfläche des jeweils anderen Hohlkörpers ausgerichtet und angeordnet wird. Das Ausrichten der Hohlkörper zueinander kann manuell oder mittels ein- oder mehrgelenkiger Roboter erfolgen.

In einem nächsten Verfahrensschritt 9 werden die zuvor ausgerichteten Hohlkörper entlang der aufeinander ausgerichteten umlaufenden Kantenflächen miteinander verschweißt, sodass eine vollständig umlaufende Schweißnaht erzeugt wird, die eine sich auf der Innenseite des Rohrleitungselements erstreckende Wurzel aufweist. Vorzugsweise wird eine einlagige Schweißnaht angebracht.

Im Anschluss an das Schweißen werden die miteinander verschweißten Hohlkörper in einem Verfahrensschritt 21, der wiederum mehrere, nicht näher dargestellte Unterschritte aufweisen kann, für das nachfolgende Beschichten vorbereitet. Die Vorbereitung umfasst das Reinigen der miteinander verschweißten Hohlkörper in einem oder mehreren Tauchbädern, in denen beispielsweise Beize oder Spülmedien wie etwa entmineralisiertes Wasser vorgehalten werden können. Die genaue Anzahl und Anordnung der Vorbereitungsschritte richtet sich nach den Spezifikationen des zu verwendenden Beschichtungsmaterials.

Die in Schritt 21 vorbereiteten verschweißten Hohlkörper werden in einem nächsten Verfahrensschritt 23 sodann in einem oder mehreren Tauchgängen mittels eines Autodepositionsverfahrens chemisch beschichtet. Durch das Eintauchen wird erreicht, dass die vollständige Innenseite inklusive der Schweißnaht, aber auch die Außenseite der Hohlkörper im Wesentlichen vollständig beschichtet wird.

Im Nachgang zum Beschichten der Hohlkörper und der Schweißnaht mit der polymerbasierten Schicht findet eine thermische Nachbehandlung in einem Schritt 25 statt. Der Schritt 25 kann einen oder mehrere Unterschritte umfassen, in denen jeweils ein Flash-Off, oder ein Tempern mit vorbestimmten Temperaturen und Temperdauern erfolgt (Niedrigtempern oder Hochtempern). Optional können die so beschichteten und nachbehandelten Rohrleitungselemente, die aus den Hohlkörpern erzeugt wurden, in einem Schritt 27 pulverbeschichtet werden. Auch die Pulverbeschichtung wird vorzugsweise in einer thermischen Nachbehandlung in Schritt 25 ausgehärtet.

Im Anschluss daran wird in Schritt 29 das Rohrleitungselement aus dem Herstellungsprozess ausgeführt und liegt einsatzbereit vor.

Der Verfahrensschritt 25 zur thermischen Nachbehandlung der Rohrleitungselemente ist der Einfachheit halber als ein singulärer Schritt abgebildet. Es können aber in Schritt 25 mehrere aufeinanderfolgende Wärmebehandlungsstufen erfolgen, die in einer oder in mehreren verschiedenen Einrichtungen vorgenommen werden.

Das Schweißverfahren gemäß Schritt 9 kann beispielsweise dadurch optimiert werden, dass in einem Messschritt 13, der zeitlich zu einem beliebigen Zeitpunkt zwischen den Schritten 1a, b und dem Schweißschritt 9 vorgenommen werden kann, die Durchmesser der Hohlkörper und die Wandstärken der Hohlkörper insbesondere im Bereich der Kantenflächen vermessen werden. Optional erfolgt online eine Vermessung, beispielsweise optisch mittels Spalterkennung, unmittelbar beim Verfahrensschritt der Kantenflächenerzeugung, und auf Basis der gemessenen Größen dann eine Anpassung der Schweißparameter zur Kompensation etwaig festgestellter Abweichungen der gemessenen Geometrie von der Ausgangsgeometrie, für die die ursprünglichen Schweißparameter hinterlegt waren. Dies ermöglicht, im Schweißvorgang selbst die Auswirkungen der Abweichungen, beispielsweise etwaige Unrundheiten des Hohlkörpers, zu kompensieren.

In Abhängigkeit der gemessenen Parameter wird vorzugsweise in einem Verfahrensschritt 15 aus einer vordefinierten Wertetabelle ein Parametersatz zum optimalen Anbringen der Schweißnaht ausgewählt. Die Parameter, die in der vordefinierten Wertetabelle für jeden Durchmesser und jede Wandstärke abgelegt sind, umfassen vorzugsweise den Vorschub, die Bahn des Schweißwerkzeugs, Wahl eines Schweißzusatzes und, bei Lichtbogenschweißen, die anzuwendende Spannung, die Förderrate des Schweißdrahts etc.

In einem darauffolgenden Schritt 17 werden vorzugsweise die zuvor ermittelten Parameter in das Schweißwerkzeug eingelesen oder, sofern manuell geschweißt werden soll, dem Bediener bereitgestellt, damit im darauffolgenden Schritt 19 das Verschweißen des ersten und zweiten Hohlkörpers miteinander stattfinden kann.

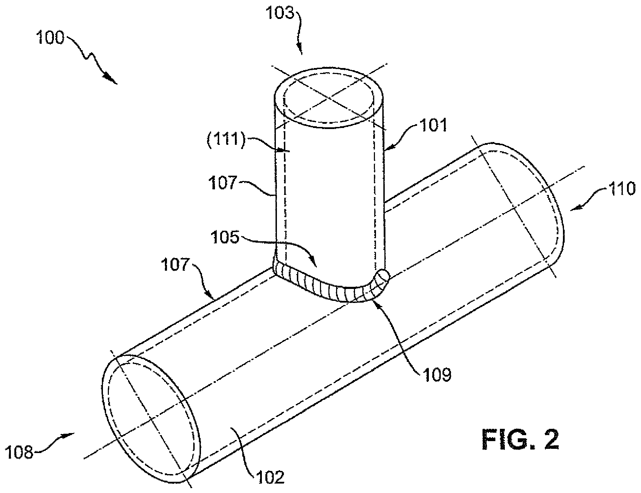

Unter Bezugnahme auf Figur 1 wurde das Verfahren schematisch erläutert. Das mit dem Verfahren erzeugte Rohrleitungselement, auf das zuvor schon teilweise Bezug genommen wurde, wird in den Figuren 2 bis 5a - e an mehreren Varianten näher erläutert.

In Figur 2 ist zunächst ein Rohrleitungselement 100 gezeigt, das einen ersten Hohlkörper 101 und einen zweiten Hohlkörper 102 aufweist.

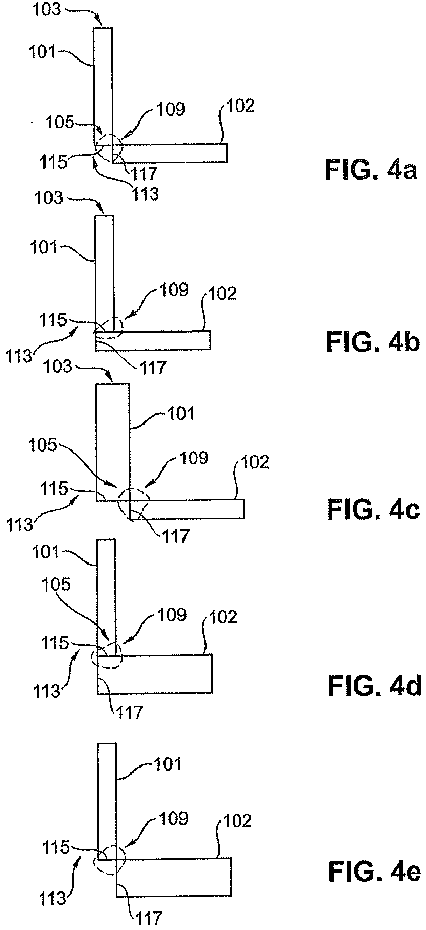

Der erste Hohlkörper 101 weist ein erstes Stirnende 103 auf und ein zweites Stirnende 105, an welchem er mit dem zweiten Hohlkörper 102 verschweißt ist. Der Hohlkörper 102 weist an der Stelle, an welcher er mit dem ersten Hohlkörper 101 verschweißt ist, einen Ausschnitt (113, vgl. Fig. 4) in seiner Seitenwand 107 auf.

Der erste Hohlkörper 101 und der zweite Hohlkörper 102 sind mittels einer einlagigen vollständig umlaufenden Schweißnaht 109 verbunden.

Im Inneren des Rohrleitungselements 100 weist das Rohrleitungselement 100 eine polymerbasierte Schicht 111 auf, die sich vollständig entlang der Innenseiten der Hohlkörper 101, 102 erstreckt und auch die umlaufende Schweißnaht 109 auf der Innenseite des Rohrleitungselements 100 jedenfalls vollständig bedeckt. Sofern das Rohrleitungselement in einem Tauchverfahren beschichtet wurde, ist auch die äußere Oberfläche der ersten und zweiten Hohlkörper 101, 102 sowie der Schweißnaht 109 zumindest weitestgehend von der polymerbasierten Schicht bedeckt.

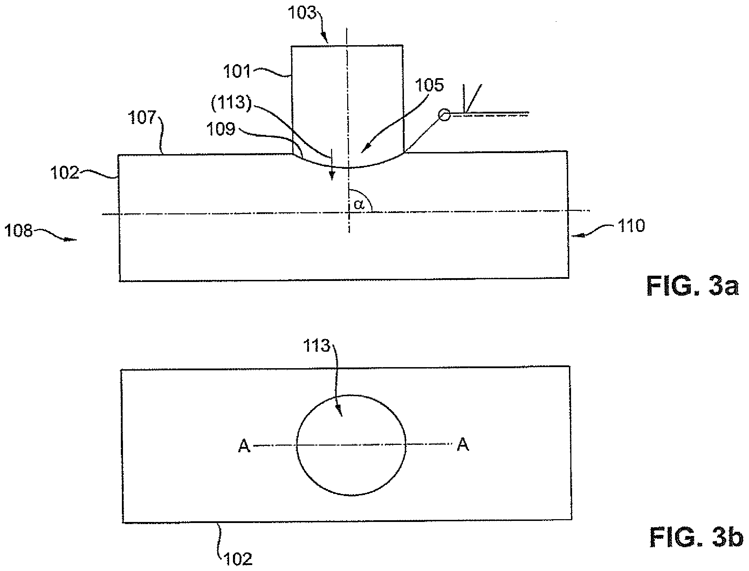

Der erste Hohlkörper 101 ist im gezeigten Ausführungsbeispiel in etwa mittig zwischen einem ersten Stirnende 108 und einem zweiten Stirnende 110 des zweiten Hohlkörpers 102 angeordnet und, wie sich insbesondere in Figuren 3a, b erkennen lässt, möglichst koaxial auf einen in der Seitenwand 107 des zweiten Hohlkörpers 102 ausgebildeten Ausschnitt 113 ausgerichtet. Der erste Hohlkörper 101 und der zweite Hohlkörper 102 sind zueinander in einem Winkel α aufeinander ausgerichtet, der beispielsweise in einem Bereich um 90° liegen kann.

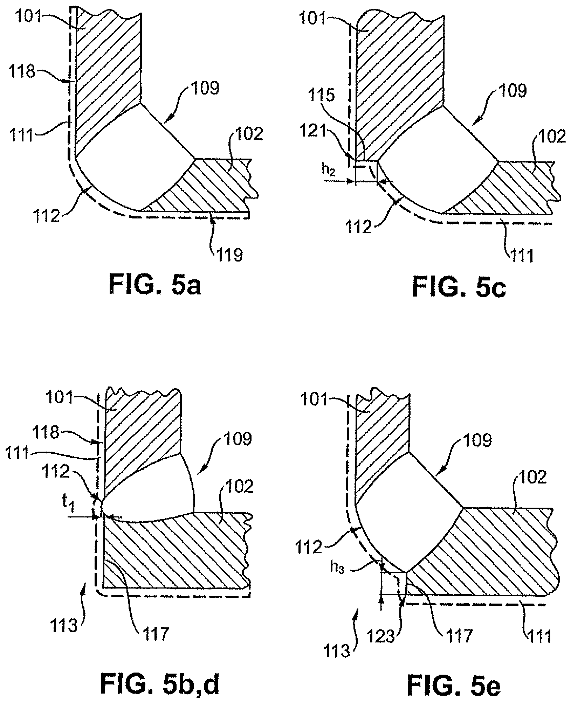

In den Figuren 4a - e und 5a - e sind verschiedene Details zur Positionierung der Hohlkörper relativ zueinander sowie zur Auswahl der Form der Schweißnaht abgebildet, jeweils entlang der Schnittebene A-A.

Aus den Figuren 4a bis e gehen unterschiedliche Anordnungsvarianten der ersten und zweiten Hohlkörper 101, 102 zueinander hervor, und mit ihnen auch unterschiedliche Szenarien für die konkrete Ausprägung der Schweißnaht im Inneren des Rohrleitungselements 100 (vgl. Figuren 1 bis 3b). Den Figuren 4a bis e ist gemein, dass der erste Grundkörper an seinem zweiten Stirnende 105 eine Kantenfläche 115 aufweist, und der zweite Hohlkörper 102 eine den Ausschnitt 113 begrenzende Kantenfläche 117 aufweist. Die Ausführungsformen der Figuren 4a bis 4e unterscheiden sich in erster Linie hinsichtlich der Anordnung der Kantenflächen 115, 117 zueinander.

In Figur 4a ist zunächst abgebildet, dass die Kantenfläche 115 des ersten Hohlkörpers 101 in die von der Kantenfläche des zweiten Hohlkörpers 102 definierte Öffnung 113 hineinragt. Vorzugsweise sind der erste Hohlkörper 101 und der zweite Hohlkörper 102 so aufeinander ausgerichtet, und der Ausschnitt 113 im zweiten Hohlkörper 102 so dimensioniert, dass die Kantenfläche 115 des ersten Hohlkörpers 101 nur an äußeren umlaufenden Kante mit dem zweiten Hohlkörper 102 in Verbindung steht, oder sich vollständig innerhalb des Ausschnitts 113 erstreckt. Auf diese Weise muss zum Erzielen einer vollständig umlaufenden Schweißnaht nur vergleichsweise Material aufgeschmolzen werden, und eine zügige Arbeitsweise wird ermöglicht. Im Idealfall lässt sich bei einer Anordnung gemäß Figur 4a eine Schweißnaht erzeugen, wie sie in Figur 5a dargestellt ist. Unter "Idealfall" wird hierbei eine korrekte Auswahl eines vordefinierten Parametersatzes verstanden, der die genauen Abmessungen der Hohlkörper 101 und 102 und die Position der Kantenflächen 115, 117 berücksichtigen.

Im Unterschied zu Figur 4a ist in Figur 4b der erste Hohlkörper etwas größer hinsichtlich seines Durchmessers gewählt, jedenfalls relativ zum Durchmesser des Ausschnitts 113. Die Kantenfläche 115 liegt außen auf dem zweiten Hohlkörper 102 auf. Die Innenseite der Wandung des ersten Hohlkörpers 101 schließt vorzugsweise bündig mit der Kantenfläche 117 des Ausschnitts 113 im zweiten Hohlkörper 102 ab. Bei einer Ausrichtung und Dimensionierung gemäß Figur 4b wird bei Auswahl eines entsprechenden Parametersatzes ein Schweißbild gemäß Figuren 5b,d erhalten.

In Figur 4c ist eine Ausrichtung zwischen erstem Hohlkörper 101 und zweitem Hohlkörper 102 im Wesentlichen wie in Figur 4a erfolgt, so dass die Kantenfläche 115 mit einer außen umlaufenden Kante an der Kantenfläche 117 des zweiten Hohlkörpers 102 anliegt oder zu dieser dort benachbart ist.

Im Unterschied zu Figur 4a ist die Materialstärke des ersten Hohlkörpers 101 allerdings höher, so dass sich ein Schweißbild, jeweils wiederum bei Auswahl des korrekten Parametersatzes, gemäß Figur 5c einstellen wird.

Figur 4d unterscheidet sich hinsichtlich der Dimensionierung des ersten Hohlkörpers relativ zum zweiten Hohlkörper von Figur 4b. Qualitativ ist hier dasselbe Schweißbild zu erwarten, weswegen auf die oberen Ausführungen sowie auf Figuren 5b,d verwiesen wird.

Figur 4e wiederum zeigt eine Ausrichtung der ersten und zweiten Hohlkörper 101, 102 relativ zueinander, wie sie auch bei den Figuren 4a und 4c bereits ausgewählt waren. Im Unterscheid zu den Figuren 4d, 4c ist die Materialstärke des zweiten Hohlkörpers 102 allerdings so ausgewählt, dass sich ein Schweißbild gemäß Figur 5e einstellt, sofern der korrekte Parametersatzgewählt wird.

Wie sich aus Figur 5a ergibt, sind bei der in Figur 4a gezeigten Ausrichtung die Hohlkörper 101 und 102 zueinander im Idealfall bei Kantenflächen 115, 117 vollständig von einer Wurzel 112 der Schweißnaht 109 erfasst, so dass ein sanfter Übergang zwischen einer Innenseite 118 des ersten Hohlkörpers 101 und einer Innenseite 119 des zweiten Hohlkörpers 102 erzeugt wird. Auf diese Geometrie lässt sich idealerweise die polymerbasierte Schicht 111 aufbringen. In Figuren 5b,d läuft die Wurzel 112 der Schweißnaht 109 ebenfalls vollständig umfänglich entlang der Verbindungsstelle zwischen dem ersten Hohlkörper 101 und dem zweiten Hohlkörper 102 um. Im Unterscheid zu Figur 4a ist aber nur die Kantenfläche 115 des ersten Hohlkörpers 101 vollständig von der Schweißnaht 109 erfasst worden, während die Kantenfläche 117 des zweiten Hohlkörpers 102 nur partiell erfasst worden ist. Aufgrund der Ausrichtung und Dimensionierung zwischen erstem Hohlkörper 101 und Ausschnitt 113 steht die Wurzel 112 der Schweißnaht 109 aber lediglich um einen vorbestimmten Maximalwert h₁ radial nach innen von der Wand 118 des ersten Hohlkörpers 101 vor. h₁ liegt vorzugsweise in einem Bereich des 0,7fachen der Materialstärke der Wand 107 oder darunter. Die Schweißnaht stellt somit keine Behinderung für das vollständige Benetzen der Innenseite des Rohrleitungselements mit der polymerbasierten Schicht 111 dar.

In Figur 5c ist eine Variante dargestellt, in der aufgrund der Materialstärke des ersten Hohlkörpers 101 nicht die vollständige Kantenfläche 115 des ersten Hohlkörpers 101 von der Wurzel 112 der Schweißnaht 109 erfasst wurde, so dass ein Teil, nämlich im Bereich einer Innenkante 121 radial nach innen von der Schweißnaht 109, bezogen auf den ersten Hohlkörper 101, vorsteht. Solange aber die Innenkante 121 nicht mehr als um einen vorbestimmten Maximalwert h₂ von der Schweißnaht 109 beabstandet ist, ist die durch die verbleibende Kantenfläche 115 entstehende Schwelle für den Strömungswiderstand in tolerierbaren Grenzen. Ferner wird eine vollständige Benetzung der Innenseite des Rohrleitungselements mit der polymerbasierten Schicht 111 hierdurch nicht signifikant beeinträchtigt. Vorzugsweise liegt der Wert h₂ in einem Bereich des 0,5fachen der Differenz der Wandstärke der Wände 107, falls diese dieselbe Wandstärke aufweisen, oder darunter. Alternativ ist h2 vorzugsweise geringer als die Differenz der beiden Wandstärken der Hohlkörper 101, 102, sofern die Wandstärken voneinander verschieden sind.

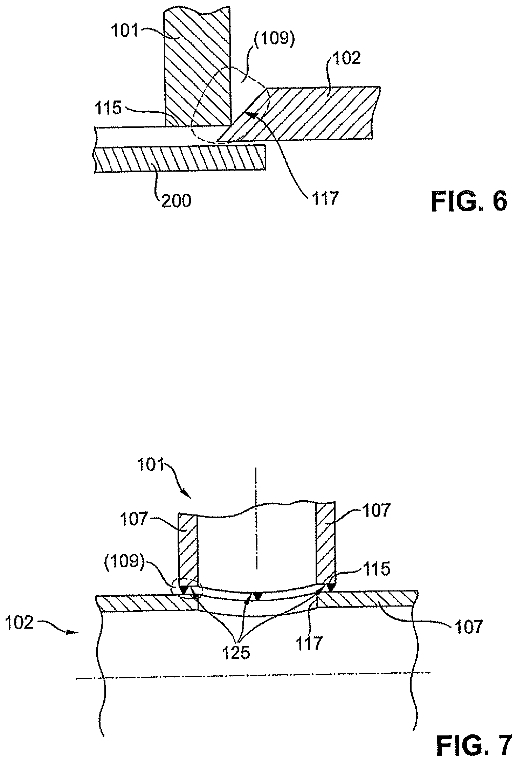

Um ein Schweißbild wie in Figur 5c zu erhalten, wird vorzugsweise eine Ausrichtung der Hohlkörper 101, 102 gemäß Figur 6 gewählt. Besonders bevorzugt wird die Kantenfläche 115 des ersten Hohlkörpers 101 und/oder die Kantenfläche 117 des zweiten Hohlkörpers 102 angeschrägt. Hierdurch wird die Menge an aufzuschmelzendem Material signifikant verringert. Da die Materialstärke im Bereich der zu erzeugenden Schweißnaht 109 sehr gering sein kann, ist es vorteilhaft, eine Badstütze 200 in den zweiten Hohlkörper 102 einzuführen, die ein Durchsacken des aufgeschmolzenen Metalls verhindert.

In Figur 5e ist analog zu Figur 5c dargestellt, in der aufgrund der Materialstärke eines der Hohlkörper, in diesem Fall des zweiten Hohlkörpers 10, keine vollständige Erfassung beider Kantenflächen des ersten Hohlkörpers 101 und des zweiten Hohlkörpers 102 erfolgt. In diesem Fall ist es eine Innenkante 123 am Ausschnitt 113 im zweiten Hohlköper 102, die um einen vorbestimmten Wert h₃ von der Wurzel 112 der Schweißnaht 109 beabstandet ist, so dass ein Teil der Kantenfläche 117 des zweiten Hohlkörpers 102 weiterhin sichtbar ist. Sofern aber der Wert h₃ einen vorbestimmten Maximalwert nicht überschreitet, vorzugsweise bestimmt wie h₂ weiter oben, wird die vollständige Ausbildung einer polymerbasierten Schicht 111 jedoch nicht behindert, und auch die Strömungszustände nicht unzulässig verschlechtert. Die Vorteile der Ausführungsformen gemäß den Figuren 5c und e liegen in einer technisch deutlich einfacheren Beherrschbarkeit. Die Durchmesser- und Materialstärkentoleranzen des ersten Hohlkörpers 101 und des zweiten Hohlkörpers 102 können im Vergleich zu den Ausführungsformen der Figuren 5a und 5b,d großzügiger bemessen sein, was die Vorauswahl geeigneter Parametersätze vereinfacht.

Um ein Schweißbild gemäß Figur 5b,d zu erhalten, wird vorzugsweise eine Ausrichtung und Vorbereitung der Hohlkörper 101, 102 nach Figur 7 vorgenommen. Der erste Hohlkörper 101 weist vorzugsweise an seiner Kantenfläche 115 eine Anzahl von Vorsprüngen 125 auf, die beispielsweise als Pins ausgebildet sein können, und die einen vordefinierten Spaltabstand zu dem zweiten Hohlkörper 102 vorgeben, wenn die beiden Hohlkörper 101, 102 wie in Figur 7 gezeigt aufeinander ausgerichtet sind. Die Vorsprünge gewährleisten, dass der Spaltabstand zwischen den Hohlkörpern 101, 102 während des Schweißens konstant bleibt, und erleichtern das Schaffen einer Schweißnaht 109 mit vollständiger Wurzelerfassung wenigstens der Kantenfläche 115 des ersten Hohlkörpers 101, oder sogar der Kantenflächen 115, 117 beider Hohlkörper 101, 102.

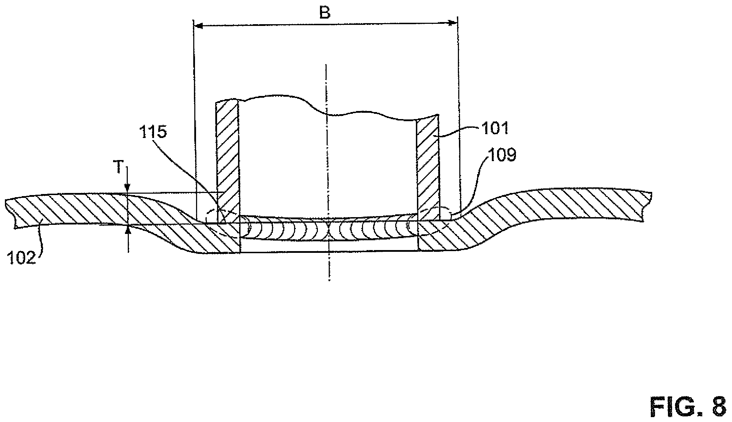

In Figur 8 ist schließlich der Aspekt der lokalen Abflachung am Beispiel des zweiten Hohlkörpers 102 gezeigt. Der zweite Hohlkörper 102 ist über einen Bereich B um eine Tiefe T eingedrückt worden, beispielsweise mittels eines Presswerkzeugs. Im abgeflachten Bereich B ist die Wand 107 des zweiten Hohlkörpers 102 im Wesentlichen plan. Dadurch ist es möglich, die Kantenfläche 115 des ersten Hohlkörpers 101 als ebenfalls plane Stirnfläche auszubilden, was fertigungsökonomisch vorteilhaft ist. Die Schweißnaht 109 erstreckt sich demzufolge ebenfalls im Wesentlichen plan in dem abgeflachten Bereich B entlang des Umfangs der Kantenfläche 115. Die Tiefe T ist vorzugsweise eine Funktion der Materialstärke der Wand 107 des zweiten Hohlkörpers und der Nennweite des ersten Hohlkörpers 101. Die Tiefe T liegt in bevorzugten Ausführungsformen in einem Bereich vom 0,05fachen bis zum 0,18fachen der Nennweite des abgeflachten Hohlkörpers, in Figur 8 also des Hohlkörpers 102.

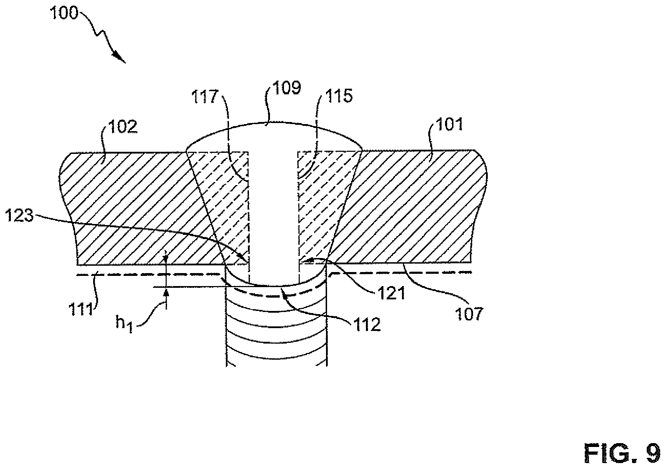

In den oben beschriebenen Figuren wurde die Erfindung in einem ersten Aspekt dahingehend beschrieben, dass der erste Hohlkörper 101 ein Anschlusselement darstellt, und der zweite Hohlkörper 102 ein Grundrohr ist. In Figur 9 ist nunmehr ein Rohrleitungselement 100 mit einer umlaufenden Schweißnaht 109 dargestellt, bei der sowohl der erste Hohlkörper 101 als auch der zweite Hohlkörper 102 jeweils ein Grundrohr sind. Die Hohlkörper 101 und 102 sind koaxial zueinander und axial zueinander benachbart angeordnet. Die Hohlkörper 101 und 102 weisen im nicht verschweißten Zustand jeweils eine dem anderen Hohlkörper zugewandte Kantenfläche 115, 117 auf. Nach dem erfindungsgemäßen Anbringen der Schweißnaht 109 erstreckt sich eine Wurzel 112 der Schweißnaht 109 umlaufend vollständig im Kreis innerhalb des Rohrleitungselements 100.

Die Kantenflächen 115, 117 werden im nicht verschweißten Zustand noch jeweils von einer umlaufenden Innenkante 121, 123 begrenzt. Die umlaufenden Innenkanten 121, 123 sind im verschweißten Zustand von der Wurzel 112 der Schweißnaht 109 vollständig erfasst. Anstelle eines kantigen, scharfen Übergangs zwischen den Hohlkörpern 101, 102 bildet nun die Wurzel 112 der Schweißnaht einen vergleichsweise sanften Übergang aus. Die Wurzel 112 der Schweißnaht 109 steht hierbei um einen vorbestimmten Maximalwert h₁ radial innerhalb der Wand 107 des Rohrleitungselements 100 vor. Der Betrag, um den die Wurzel 112 nach innen vorsteht, beträgt vorzugsweise das 0,7fache der Materialstärke der Wand 107 der Hohlkörper oder weniger.

Im Rahmen von Vorversuchen wird für den vorbestimmten Rohrdurchmesser ermittelt, mit welchen Schweißparametern sich die Wurzel 112 in der gewünschten Höhe h₁ ausbilden lässt, siehe oben. Je nachdem, welcher Rohrdurchmesser für den jeweils vorliegenden Auftrag vorliegt, wird der geeignete Parametersatz aus der vorab bestimmten Liste ausgewählt und das Schweißverfahren hiermit durchgeführt. Das Vorgehen ist dabei grundsätzlich dasselbe, egal ob das Schweißen automatisiert, teilautomatisiert oder manuell erfolgt.

Im Inneren weist das Rohrleitungselement 100 gemäß Figur 9 ebenfalls eine polymerbasierte Schicht 111 auf, die sich vollständig entlang der Innenseiten der Hohlkörper 101, 102 erstreckt und auch die umlaufende Schweißnaht 109 auf der Innenseite des Rohrs 100 jedenfalls vollständig bedeckt. Sofern das Rohrleitungselement in einem Tauchverfahren beschichtet wurde, ist auch die äußere Oberfläche der ersten und zweiten Hohlkörper 101, 102 sowie der Schweißnaht 109 zumindest weitestgehend von der polymerbasierten Schicht 111 bedeckt.

In Zusammenschau ist es mit der Erfindung gelungen, erstmalig das Anwendungsgebiet der Polymerveredelung auch auf komplexe Rohrleitungselemente mit einer oder mehreren Schweißverbindungen zu erweitern. Dort, wo der Stand der Technik bislang aufgrund mangelnder Güte der Schweißnähte auf der Innenseite der Rohrleitungselemente ein erfolgreiches Beschichten noch verhinderte, schlägt die Erfindung eine vorteilhafte Weiterentwicklung vor.

## Patentansprüche

1. Verfahren zum Herstellen eines polymerveredelten Rohrleitungselements (100), insbesondere eines Rohrleitungselements (100) einer Feuerlöschanlage, wobei das Verfahren die Schritte umfasst:
- Bereitstellen eines ersten Hohlkörpers (101) und eines zweiten Hohlkörpers (102), wobei der erste und zweite Hohlkörper (101, 102) jeweils eine Wand (107) aufweisen, und die Wand (107) jeweils eine umlaufende Kantenfläche (115, 117) aufweist, wobei die umlaufende Kantenfläche (115) des ersten Hohlkörpers (101) an einem Stirnende (105) des Hohlkörpers (101) ausgebildet ist, und wobei die umlaufende Kantenfläche (117) des zweiten Hohlkörpers (102) zu den Stirnenden (108, 110) des zweiten Hohlkörpers (101) beabstandet ist und einen Ausschnitt (113) durch die Wand des zweiten Hohlkörpers (102) hindurch definiert,
- Ausrichten der umlaufenden Kantenfläche (115) des ersten Hohlkörpers (101) und der umlaufenden Kantenfläche (117) des zweiten Hohlkörpers (102) aufeinander,
- Schweißen des ersten Hohlkörpers (101) an den zweiten Hohlkörper (102) entlang der umlaufenden Kantenflächen (115, 117), wobei eine vollständig umlaufende Schweißnaht (109) erzeugt wird, die eine sich auf der Innenseite des Rohrleitungselements (100) erstreckende Wurzel (112) aufweist, sowie
- Aufbringen einer polymerbasierten Schicht (111) auf der Innenseite des Rohrleitungselements (100), wobei die polymerbasierte Schicht (111) die Innenseite des Rohrleitungselements und die Wurzel der Schweißnaht (109) vollständig bedeckt.

2. Verfahren nach Anspruch 1,
wobei die Kantenflächen (115, 117) des ersten und des zweiten Hohlkörpers (101, 102) jeweils eine umlaufende Innenkante (121, 123) aufweisen, und der Schritt des Schweißens umfasst:
- Ausbilden der Wurzel (112) der Schweißnaht (109) in einer Dicke, die wenigstens eine der Innenkanten (115; 117), und vorzugsweise beide Innenkanten (115, 117), vollständig erfasst. wobei vorzugsweise die Wurzel (112) der Schweißnaht (109) die umlaufende Innenkante eines der (121, 123) Hohlkörper (101, 102) vollständig erfasst, und die verbleibende Innenkannte des anderen Hohlkörpers um einen vorbestimmten Maximalwert (h₂, h₃) in radialer Richtung von der Schweißnaht (109) beabstandet ist,
wobei weiter vorzugsweise der vorbestimmte Maximalwert (h₂, h₃),
a) sofern der erste und zweite Hohlkörper die gleiche Wandstärke aufweisen, kleiner oder gleich der Hälfte einer Wandstärke der Hohlkörper, besonders bevorzugt kleiner oder gleich eines Viertels der Wandstärke der Hohlkörper ist, oder
b) sofern der erste und zweite Hohlkörper unterschiedliche Wandstärken aufweisen, kleiner oder gleich einer Differenz der Wandstärken der Hohlkörper, besonders bevorzugt kleiner oder gleich der Hälfte der Differenz der Wandstärken der Hohlkörper ist.

3. Verfahren nach Anspruch 2,
wobei der Schritt des Schweißens umfasst:
Ausbilden der Wurzel (112) der Schweißnaht (109) in einer Dicke, die die Innenkanten (121, 123) beider Hohlkörper vollständig erfasst, wobei die Wurzel (112) der Schweißnaht (109) von einer Innenseite der Wand des ersten und/oder zweiten Hohlkörpers um einen vorbestimmten Maximalwert radial nach innen vorsteht, wobei der Maximalwert vorzugsweise das 0,7fache der Wandstärke der Hohlkörper oder weniger beträgt.

4. Verfahren nach einem der vorstehenden Ansprüche,
ferner umfassend den Schritt:
Erzeugen wenigstens einer der umlaufenden Kantenflächen (115, 117) des ersten und/oder zweiten Hohlkörpers (102) mittels Schneiden, vorzugsweise mittels Plasmaschneiden.

5. Verfahren nach einem der vorstehenden Ansprüche,
ferner umfassend den Schritt:
Säubern der umlaufenden Kantenfläche (115) oder Kantenflächen (115, 117) vor dem Schweißen, vorzugsweise nach dem Schneiden, insbesondere Plasmaschneiden.

6. Verfahren nach Anspruch 5,
wobei der Schritt des Säuberns das Entfernen von Metalloxiden und losen Partikeln von der wenigstens einen umlaufenden Kantenfläche (115, 117) umfasst, vorzugsweise mittels Bürsten.

7. Verfahren nach einem der Ansprüche 3 bis 6,
ferner umfassend den Schritt:
Abflachen der Wand des ersten und/oder zweiten Hohlkörpers (102) in demjenigen Bereich, in dem sich jeweils die umlaufende Kantenfläche (115, 117) erstreckt oder erzeugt werden soll, vorzugsweise vor dem Schritt des Schweißens und weiter vorzugsweise vor dem Schritt des Schneidens.

8. Verfahren nach einem der vorstehenden Ansprüche,
wobei das Aufbringen der polymerbasierten Schicht mittels Eintauchen des Rohrleitungselements in ein Tauchbad erfolgt, das ein entsprechendes Beschichtungsmaterial enthält.

9. Verfahren nach einem der vorstehenden Ansprüche,
wobei die Hohlkörper aus einem zur chemischen Autodeposition geeigneten Metall, insbesondere einem eisenhaltigen und/oder zinkhaltigen Metall ausgebildet sind, und der Schritt des Aufbringens der Polymerschicht auf der Innenseite des Rohrleitungselements (100) umfasst:
Beschichten, insbesondere mittels chemischer Autodeposition, vorzugsweise mittels Eintauchen des Rohrleitungselements (100) in ein Tauchbad, das ein chemisches Autodepositionsmaterial auf Polymerbasis enthält,
wobei vorzugsweise das Autodepositionsmaterial polymere Bestandteile enthält, welche ionisch an der Wand der Hohlkörper und an der Wurzel (112) der Schweißnaht (109) gebunden werden, und vorzugsweise als wässrige Emulsion oder Dispersion vorliegt.

10. Verfahren nach Anspruch 9,wobei das Autodepositionsmaterial vorzugsweise sauer ist, vorzugsweise einen pH-Wert in einem Bereich von 1 bis 5 aufweist, und vorzugsweise ein Startermaterial in Form von Metallhalogeniden umfasst; und/oder.
wobei das Autodepositionsmaterial als polymeren Bestandteil ein oder mehrere autodepositionierbare Polymere aufweist, vorzugsweise ausgewählt aus der Liste bestehend aus:
i) Epoxiden,
ii) Acrylaten,
iii) Styroacrylaten,
iv) Epoxyacrylaten,
v) Isocyanaten, insbesondere Urethanen, wie etwa Polyurethanen,
vi) Polymere mit Vinylgruppe, beispielsweise Polyvinylidenchlorid, oder
iv) eine Kombination aus zwei oder mehr von i), ii) oder iii), die vorzugsweise miteinander querverbunden sind, weiter vorzugsweise über ein Isocyanat, besonders bevorzugt über ein Urethan.

11. Verfahren nach Anspruch 9 oder 10,
wobei der Schritt des Eintauchens in einem oder mehreren Tauchgängen solange fortgesetzt wird, bis die an der Innenseite des Rohrleitungselements angebrachte polymerbasierte Schicht eine Dicke in einem Bereich von 7 µm bis 80 µm aufweist, vorzugsweise eine Dicke in einem Bereich von 7 µm bis 30 µm.

12. Rohrleitungselement (100), insbesondere hergestellt in einem Verfahren nach einem der vorstehenden Ansprüche, mit:
- einem ersten Hohlkörper (101),
- einem zweiten Hohlkörper (102),
wobei die Hohlkörper (101, 102) aufeinander ausgerichtet sind, und der erste und der zweite Hohlkörper (101, 102) mittels einer umlaufenden Schweißnaht (109) verbunden sind, wobei die Schweißnaht (109) an einem Stirnende (105) des ersten Hohlkörpers (101) ausgebildet ist, wobei die Schweißnaht (109) zu den Stirnenden (108, 110) des zweiten Hohlkörpers (102) beabstandet ist, und
wobei die Schweißnaht (109) eine sich auf der Innenseite des Rohrleitungselements (100) erstreckende Wurzel (112) aufweist, und
- einer polymerbasierten Schicht (111) auf der Innenseite des Rohrleitungselements, wobei die polymerbasierte Schicht (111) die Innenseite des Rohrleitungselements (100) und die Schweißnaht (109) vollständig bedeckt.

13. Rohrleitungssystem einer Feuerlöschanlage, mit
Einer Anzahl von Rohrleitungselementen (100), die miteinander gekoppelt sind,
wobei eines, mehrere oder sämtliche Rohrleitungselemente nach Anspruch 12 ausgebildet sind.

14. Verwendung eines Rohrleitungselements in einem Rohrleitungssystem einer Feuerlöschanlage, in der eine Anzahl von Rohrleitungselementen miteinander gekoppelt werden, und wobei eines, mehrere oder sämtliche der Rohrleitungselemente nach Anspruch 12 ausgebildet sind.

## Claims

1. A method for producing a polymer-enhanced pipeline element (100), in particular a pipeline element (100) of a fire extinguishing installation, wherein the method comprises the steps:
- providing a first hollow body (101) and a second hollow body (102), wherein the first and second hollow bodies (101, 102) each have a wall (107), and the wall (107) has in each case an circumferential edge surface (115, 117), wherein the circumferential edge surface (115) of the first hollow body (101) is formed at a face end (105) of the hollow body (101), and wherein the circumferential edge surface (117) of the second hollow body (102) is spaced apart from the face ends (108, 110) of the second hollow body (101) and defines a cutout (113) through the wall of the second hollow body (102),
- aligning the circumferential edge surface (115) of the first hollow body (101) and the circumferential edge surface (117) of the second hollow body (102) with one another,
- welding the first hollow body (101) to the second hollow body (102) along the circumferential edge surfaces (115, 117), wherein a fully circumferential weld seam (109) is generated which has a root (112) extending on the inside of the pipeline element (100), and
- applying a polymer-based layer (111) to the inside of the pipeline element (100), wherein the polymer-based layer (111) completely covers the inside of the pipe element and the root of the weld seam (109).

2. The method as claimed in claim 1,
wherein the edge surfaces (115, 117) of the first and of the second hollow body (101, 102) have in each case a circumferential inner edge (121, 123), and the welding step comprises:
- forming the root (112) of the weld seam (109) with a thickness that completely encompasses at least one of the inner edges (115; 117) and preferably both inner edges (115, 117), wherein preferably the root (112) of the weld seam (109) completely encompasses the circumferential inner edge of one of the (121, 123) hollow bodies (101, 102), and the remaining inner edge of the other hollow body is spaced apart from the weld seam (109) by a predetermined maximum value (h₂, h₃) in a radial direction,
wherein further preferably the predetermined maximum value (h₂, h₃),
a) if the first and second hollow bodies have the same wall thickness, is less than or equal to half of a wall thickness of the hollow bodies, particularly preferably less than or equal to one quarter of the wall thickness of the hollow bodies, or
b) if the first and second hollow bodies have different wall thicknesses, is less than or equal to a difference between the wall thicknesses of the hollow bodies, particularly preferably less than or equal to half of the difference between the wall thicknesses of the hollow bodies.

3. The method as claimed in claim 2,
wherein the welding step comprises:
forming the root (112) of the weld seam (109) with a thickness which completely encompasses the inner edges (121, 123) of both hollow bodies, wherein the root (112) of the weld seam (109) protrudes radially inward from an inside of the wall of the first and/or second hollow body by a predetermined maximum value, wherein the maximum value preferably amounts to 0.7 times the wall thickness of the hollow bodies or less.

4. The method as claimed in any of the preceding claims,
furthermore comprising the step:
generating at least one of the circumferential edge surfaces (115, 117) of the first and/or second hollow body (102) by means of cutting, preferably by means of plasma cutting.

5. The method as claimed in any of the preceding claims,
furthermore comprising the step:
cleaning the circumferential edge surface (115) or edge surfaces (115, 117) before the welding, preferably after the cutting, in particular plasma cutting.

6. The method as claimed in claim 5,
wherein the cleaning step comprises removing metal oxides and loose particles from the at least one circumferential edge surface (115, 117), preferably by brushing.

7. The method as claimed in any of claims 3 to 6,
furthermore comprising the step:
flattening the wall of the first and/or second hollow body (102) in the region in which, in each case, the circumferential edge surface (115, 117) extends or is to be generated, preferably before the welding step and more preferably before the cutting step.

8. The method as claimed in any of the preceding claims,
wherein the application of the polymer-based layer is performed by dipping of the pipeline element into a dip bath which contains a corresponding coating material.

9. The method as claimed in any of the preceding claims,
wherein the hollow bodies are formed from a metal suitable for chemical autodeposition, in particular a ferrous and/or zinc-containing metal, and the step of applying the polymer layer to the inside of the pipeline element (100) comprises:
coating, in particular by means of chemical autodeposition, preferably by dipping of the pipeline element (100) into a dip bath which contains a polymer-based chemical autodeposition material,
wherein preferably the autodeposition material comprises polymer constituents which are ionically bonded to the wall of the hollow bodies and to the root (112) of the weld seam (109), and is preferably present as an aqueous emulsion or dispersion.

10. The method as claimed in claim 9,
wherein the autodeposition material is acidic, preferably has a pH value in a range from 1 to 5, and preferably comprises a starter material in the form of metal halides, and/or wherein the autodeposition material has, as polymer constituent, one or more autodepositionable polymers preferably selected from the list comprising:
i) epoxides,
ii) acrylates,
iii) styrene acrylates,
iv) epoxy acrylates,
v) isocyanates, especially urethanes, such as polyurethanes,
vi) polymers with a vinyl group, for example polyvinylidene chloride, or
iv) a combination of two or more of i), ii) or iii), which are preferably crosslinked to one another, more preferably via an isocyanate, particularly preferably via a urethane.

11. The method as claimed in claim 9 or 10,
wherein the dipping step is continued in one or more dipping processes until such time as the polymer-based layer applied to the inside of the pipeline element has a thickness in a range from 7 µm to 80 µm, preferably a thickness in a range from 7 µm to 30 µm.

12. A pipeline element (100),
in particular produced in a method as claimed in any of the preceding claims, having:
- a first hollow body (101),
- a second hollow body (102),
wherein the hollow bodies (101, 102) are aligned with one another, and the first and second hollow bodies (101, 102) are connected by means of a circumferential weld seam (109), wherein the weld seam (109) is formed at a face end (105) of the first hollow body (101), wherein the weld seam (109) is spaced apart from the face ends (108, 110) of the second hollow body (102), and
wherein the weld seam (109) has a root (112) extending on the inside of the pipeline element (100), and
- a polymer-based layer (111) on the inside of the pipeline element, wherein the polymer-based layer (111) completely covers the inside of the pipeline element (100) and the weld seam (109).

13. A pipeline system of a fire extinguishing installation, having
a number of pipeline elements (100) which are coupled to one another,
wherein one, multiple or all pipeline elements are designed as claimed in claim 12.

14. The use of a pipeline element in a pipeline system of a fire extinguishing installation, in which a number of pipeline elements are coupled to one another, and wherein one, multiple or all of the pipeline elements are designed as claimed in claim 12.

## Revendications

1. Procédé de fabrication d'un élément de conduite tubulaire (100) revêtu de polymère, en particulier d'un élément de conduite tubulaire (100) d'un système extincteur, dans lequel le procédé comprend les étapes :
- de fourniture d'un premier corps creux (101) et d'un deuxième corps creux (102), dans lequel le premier et le deuxième corps creux (101, 102) présentent respectivement une paroi (107) et la paroi (107) présente respectivement une surface d'arête périphérique (115, 117), dans lequel la surface d'arête périphérique (115) du premier corps creux (101) est réalisée sur une extrémité frontale (105) du corps creux (101), et dans lequel la surface d'arête périphérique (117) du deuxième corps creux (102) est tenue à distance par rapport aux extrémités frontales (108, 110) du deuxième corps creux (101) et définit une découpe (113) à travers la paroi du deuxième corps creux (102),
- d'orientation de la surface d'arête périphérique (115) du premier corps creux (101) et de la surface d'arête périphérique (117) du deuxième corps creux (102) l'une sur l'autre,
- de soudage du premier corps creux (101) au deuxième corps creux (102) le long des surfaces d'arête périphériques (115, 117), dans lequel un joint de soudure (109) totalement périphérique est produit, lequel présente une racine (112) s'étendant sur le côté intérieur de l'élément de conduite tubulaire (100), ainsi que
- d'application d'une couche à base de polymère (111) sur le côté intérieur de l'élément de conduite tubulaire (100), dans lequel la couche à base de polymère (111) recouvre totalement le côté intérieur de l'élément de conduite tubulaire et la racine du joint de soudure (109).

2. Procédé selon la revendication 1,
dans lequel les surfaces d'arête (115, 117) du premier et du deuxième corps creux (101, 102) présentent respectivement une arête intérieure périphérique (121, 123), et l'étape du soudage comprend :
- la réalisation de la racine (112) du joint de soudure (109) dans une épaisseur qui renferme totalement au moins une des arêtes intérieures (115 ; 117) et de préférence les deux arêtes intérieures (115, 117), dans lequel de préférence la racine (112) du joint de soudure (109) renferme totalement l'arête intérieure périphérique (121, 123) d'un des corps creux (101, 102), et l'arête intérieure restante de l'autre corps creux est tenue à distance du joint de soudure (109) dans une direction radiale d'une valeur maximale prédéfinie (h₂, h₃),
dans lequel par ailleurs de préférence la valeur maximale (h₂, h₃) prédéfinie
a) dans la mesure où le premier et le deuxième corps creux présentent la même épaisseur de paroi, est inférieure ou égale à la moitié d'une épaisseur de paroi des corps creux, de manière particulièrement préférée est inférieure ou égale à un quart de l'épaisseur de paroi des corps creux, ou
b) dans la mesure où le premier et le deuxième corps creux présentent différentes épaisseurs de paroi, est inférieure ou égale à une différence des épaisseurs de paroi des corps creux, de manière particulièrement préférée est inférieure ou égale à la moitié de la différence des épaisseurs de paroi des corps creux.

3. Procédé selon la revendication 2,
dans lequel l'étape du soudage comprend :
la réalisation de la racine (112) du joint de soudure (109) dans une épaisseur qui renferme totalement les arêtes intérieures (121, 123) des deux corps creux, dans lequel la racine (112) du joint de soudure (109) fait saillie radialement vers l'intérieur d'une valeur maximale prédéfinie d'un côté intérieur de la paroi du premier et/ou du deuxième corps creux, dans lequel la valeur maximale est de préférence inférieure ou égale à 0,7 fois l'épaisseur de paroi des corps creux.

4. Procédé selon l'une quelconque des revendications précédentes, comprenant en outre l'étape :
de production d'au moins une des surfaces d'arête périphériques (115, 117) du premier et/ou du deuxième corps creux (102) par coupage, de préférence par coupage au plasma.

5. Procédé selon l'une quelconque des revendications précédentes, comprenant en outre l'étape :
de nettoyage de la surface d'arête périphérique (115) ou des surfaces d'arête périphériques (115, 117) avant le soudage, de préférence après le coupage, en particulier le coupage au plasma.

6. Procédé selon la revendication 5,
dans lequel l'étape du nettoyage comprend l'élimination d'oxydes métalliques et de particules lâches de l'au moins une surface d'arête périphérique (115, 117), de préférence par brossage.

7. Procédé selon l'une quelconque des revendications 3 à 6, comprenant en outre l'étape :
d'aplatissement de la paroi du premier et/ou du deuxième corps creux (102) dans la zone dans laquelle précisément respectivement la surface d'arête périphérique (115, 117) s'étend ou doit être produite, de préférence avant l'étape du soudage et par ailleurs de préférence avant l'étape du coupage.

8. Procédé selon l'une quelconque des revendications précédentes,
dans lequel l'application de la couche à base de polymère est effectuée par immersion de l'élément de conduite tubulaire dans un bain d'immersion qui contient un matériau de revêtement correspondant.

9. Procédé selon l'une quelconque des revendications précédentes,
dans lequel les corps creux sont réalisés à partir d'un métal adapté pour le dépôt automatique par voie chimique, en particulier un métal contenant du fer et/ou contenant du zinc, et l'étape de l'application de la couche de polymère sur le côté intérieur de l'élément de conduite tubulaire (100) comprend :
le revêtement, en particulier par dépôt automatique par voie chimique, de préférence par immersion de l'élément de conduite tubulaire (100) dans un bain d'immersion qui contient un matériau de dépôt automatique par voie chimique à base de polymère,
dans lequel de préférence le matériau de dépôt automatique contient des constituants, lesquels seront liés de manière ionique à la paroi des corps creux et à la racine (112) du joint de soudure (109), et de préférence est présent en tant qu'émulsion ou dispersion aqueuse.

10. Procédé selon la revendication 9, dans lequel le matériau de dépôt automatique est de préférence acide, de préférence présente une valeur de pH dans une plage de 1 à 5, et comprend de préférence un matériau initiateur sous forme d'halogénures métalliques ; et/ou
dans lequel le matériau de dépôt automatique présente, en tant que constituant polymère, un ou plusieurs polymères pouvant être déposés de manière automatique, de préférence choisis parmi la liste constituée :
i) d'époxydes,
ii) d'acrylates,
iii) de styroacrylates,
iv) d'époxyacrylates,
v) d'isocyanates, en particulier d'uréthanes, comme des polyuréthanes,
vi) de polymères avec un groupe vinyle, par exemple du polychlorure de vinylidène, ou
vii) une combinaison de deux ou de plus parmi i), ii) ou iii), qui sont liés transversalement de préférence les uns aux autres, par ailleurs de préférence par l'intermédiaire d'un isocyanate, de manière particulièrement préférée par l'intermédiaire d'un uréthane.

11. Procédé selon la revendication 9 ou 10,
dans lequel l'étape de l'immersion, lors d'une ou plusieurs passes d'immersion, se poursuit jusqu'à ce que la couche à base de polymère appliquée sur le côté intérieur de l'élément de conduite tubulaire présente une épaisseur dans une plage de 7 µm à 80 µm, de préférence une épaisseur dans une plage de 7 µm à 30 µm.

12. Elément de conduite tubulaire (100), en particulier fabriqué dans un procédé selon l'une quelconque des revendications précédentes, avec :
- un premier corps creux (101),
- un deuxième corps creux (102),
dans lequel les corps creux (101, 102) sont orientés l'un sur l'autre, et le premier et le deuxième corps creux (101, 102) sont reliés au moyen d'un joint de soudure (109) périphérique, dans lequel le joint de soudure (109) est réalisé sur une extrémité frontale (105) du premier corps creux (101), dans lequel le joint de soudure (109) est tenu à distance des extrémités frontales (108, 110) du deuxième corps creux (102), et
dans lequel le joint de soudure (109) présente une racine (112) s'étendant sur le côté intérieur de l'élément de conduite tubulaire (100), et
- une couche à base de polymère (111) sur le côté intérieur de l'élément de conduite tubulaire, dans lequel la couche à base de polymère (111) recouvre totalement le côté intérieur de l'élément de conduite tubulaire (100) et le joint de soudure (109).

13. Système de conduite tubulaire d'un système extincteur, avec
un nombre d'éléments de conduite tubulaire (100), qui sont couplés les uns aux autres,
dans lequel un, plusieurs ou la totalité des éléments de conduite tubulaire sont réalisés selon la revendication 12.

14. Utilisation d'un élément de conduite tubulaire dans un système de conduites tubulaires d'un système extincteur, dans laquelle un nombre d'éléments de conduite tubulaire sont couplés les uns aux autres, et dans laquelle un, plusieurs ou la totalité des éléments de conduites tubulaires sont réalisés selon la revendication 12.
